# FASCICULE DE BREVET EUROPEEN

(11) **EP 0 587 515 B1**
(45) Date de publication et mention de la délivrance du brevet: **08.10.1997**
(21) Numéro de dépôt: 93430009.6
(22) Date de dépôt: 01.07.1993
(51) Int. Cl.: A23B 4/056, A23B 4/044, A23B 4/28, A23B 4/30, A23B 4/052

(54) **Procédé et dispositif de salage-séchage et de fumage à froid de produits alimentaires carnés**
Verfahren und Vorrichtung zum Salzen-Trocknen und zum Kalträuchern von Fleisch-Nahrungsmittelprodukten
Process and apparatus for salting-drying and cold smoking of meat food products

(30) Priorité: 10.07.1992 FR 9208958
(43) Date de publication de la demande: 16.03.1994
(73) Titulaire: CENTRE DE COOPERATION INTERNATIONAL EN RECHERCHE AGRONOMIQUE POUR LE DEVELOPPEMENT ( CIRAD), 34032 Montpellier Cedex (FR); INSTITUT FRANCAIS DE RECHERCHE POUR L'EXPLOITATION DE LA MER (IFREMER), 92138 Issy-les-Moulineaux Cedex (FR)
(72) Inventeur: Collignan, Antoine, F-34270 Les Matelles (FR); Knockaert, Camille, F-44360 Le Temple de Bretagne (FR); Raoult-Wack, Anne, F-30660 Gallargues le Montueux (FR); Vallet, Jean-Luc, F-44980 Saint Luce Sur Loire (FR)
(74) Mandataire: Somnier, Jean-Louis

(56) Documents cités:
- FR-A- 981 660
- FR-A- 1 277 808
- FR-A- 2 599 224
- FR-A- 2 656 770
- US-A- 1 483 668
- US-A- 2 582 799
- US-A- 2 688 556
- US-A- 2 844 478
- US-A- 3 203 809
- DATABASE WPI Derwent Publications Ltd., London, GB; AN 89-088001 & HU-A-47 009 (T. HUSZKA ET AL.)
- DATABASE WPI Derwent Publications Ltd., London, GB; AN 78-35974A & JP-A-53 038 656 (NINBEN)

## Description

La présente invention a pour objet un procédé de salage-séchage et de fumage à froid de produits alimentaires carnés, et un dispositif pour la mise en oeuvre de ce procédé.

Le secteur technique de l'invention est celui de l'agro-alimentaire et concerne plus particulièrement la conservation et le fumage des produits carnés. On précise que par le terme carné, on entend aussi bien désigner les viandes que les poissons.

On sait que de tout temps, l'homme s'est attaché à mettre en oeuvre des techniques lui permettant de conserver sa nourriture pour en différer sa consommation. C'est ainsi qu'il a utilisé le sel, la chaleur et la fumée pour de nombreux produits, notamment carnés, tels que par exemple les poissons.

Ces opérations visaient à diminuer la teneur en eau du produit et à y introduire des composés ayant une action bactériostatique ou bactéricide sur les germes pathogènes et/ou d'altération.

Ces procédés, pour être efficaces, étaient appliqués de façon excessive, donnant des produits très salés ayant un goût fumé prononcé.

Ces techniques se sont perpétuées jusqu'à nos jours mais avec une finalité tout à fait différente.

Tout d'abord, la technologie de conservation par le froid s'est considérablement développée et est actuellement maîtrisée. D'autre part, les goûts des consommateurs ont profondément évolués, réclamant des produits plus "subtils", ayant subi une transformation permettant de respecter les qualités organoleptiques et nutritionnelles intrinsèques de la matière initiale.

Ainsi, par exemple, le saumon fumé qui connaît actuellement un engouement important auprès des consommateurs, possède des caractéristiques de composition qui ne lui permettent pas de se conserver à la température ambiante, mais nécessitent son stockage au froid à une température comprise entre 0 et 2° C.

Si les produits ont évolué, ainsi que les techniques de conservation, il n'en est pas de même pour le procédé dont les principes technologiques sont restés les mêmes depuis leur origine :
- salage au sel sec pur, ou en saumure ou par injection,
- séchage par convection,
- fumage par exposition du produit à de la fumée et dépôt naturel de celle-ci.

S'il y a quelques dizaines d'années les produits marins fumés représentaient des productions peu importantes, actuellement avec notamment le développement de l'aquaculture, ils représentent un enjeu économique et industriel considérable.

Le salage qui a pour but de conférer au produit une saveur particulière et d'assurer partiellement sa conservation, consiste en une étape où l'on fait pénétrer du sel (Na cl) dans la chair du poisson. Cette opération est réalisée avec du sel "pur" sans apport d'autres composés. Elle est effectuée soit à sec, soit en solution aqueuse (saumure). Lors de cette opération, le gain en sel du produit est difficile à maîtriser et la perte en eau est faible et non maîtrisable.
- Le séchage, dont l'objet est de diminuer la teneur en eau du produit, se pratique actuellement par exposition du produit à un flux d'air, dont on maîtrise la température (entre 22 et 25° C, pour le saumon fumé), le degré d'humidité et la vitesse de l'air. Ce procédé, long, de l'ordre de deux à trois heures pour des filets de un kilogramme, nécessite un équipement sophistiqué et coûteux en matière de régulation de la vitesse de l'air, de l'hygrométrie et de la température.
- Le fumage consiste à exposer le produit à un flux de fumée produite par la combustion du bois, de telle sorte que la fumée se dépose sur le produit et pénètre par diffusion dans la chair. Cette opération est également longue, de l'ordre de deux à trois heures pour des filets de un kilogramme et nécessite une parfaite maîtrise de l'environnement et plus particulièrement de la température et de l'hygrométrie, laquelle température est maintenue entre 22 et 25° C pour le traitement du saumon. Il est également possible d'effectuer le fumage à l'aide des moyens électrostatiques pour mieux fixer les particules de la fumée à la surface du produit alimentaire (US-A-2 844 478).

Le procédé traditionnel amène plusieurs commentaires. En ce qui concerne le salage, l'utilisation du sel pur permet un salage relativement rapide mais difficile à contrôler et assez peu uniforme. La perte en eau du produit, à cette étape, est faible, de l'ordre de 2%. L'utilisation d'une saumure permet de mieux maîtriser le salage, mais dans ce cas, le produit ne perd que peu ou pas d'eau, ce qui est néfaste pour sa conservation. D'autre part, la maîtrise de la qualité sanitaire de la saumure qui est généralement faiblement concentrée, est très délicate. Il en est de même pour les procédés dans lesquels on apporte la saumure par injection.

En ce qui concerne le séchage et le fumage, il s'agit de deux étapes successives du procédé mené dans une même cellule dite "de fumage".

Elles présentent dans le contexte traditionnel, cinq inconvénients majeurs :
1) le séchage est nécessairement préalable au fumage et ne peut être conduit simultanément ;
2) le coût des installations et de leur entretien est important, les différents paramètres de température, d'hygrométrie et de vitesse de l'air devant être contrôlés et régulés avec précision :
3) la température du traitement comprise entre 20 et 30° C est propice au développement bactérien ;
4) l'homogénéité du traitement dépendant du niveau de remplissage de la cellule, est difficile à maîtriser ;
5) la durée du traitement est longue, de quatre à douze heures, en fonction de la taille des filets.

La présente invention vise à remédier à ces inconvénients.

Un premier objectif de l'invention est de réduire les temps de traitement desdits produits, afin d'accroître la rentabilité des installations industrielles et d'améliorer les coûts de production.

Un second objectif est de préserver les qualités sanitaires des produits traités.

Un autre objectif est d'obtenir des produits plus homogènes avant fumage, que ceux obtenus par les procédés classiques.

Un autre objectif est d'obtenir des produits finis répondant aux qualités organoleptiques requises.

Un autre objectif est la mise en oeuvre du procédé par une infrastructure comprenant des moyens classiques à faible coût d'exploitation.

Un autre objectif est de limiter au maximum les rejets dans l'atmosphère, par utilisation optimum de la fumée produite.

Enfin, un dernier objectif est de respecter le caractère "traditionnel" des produits traités.

Ces objets sont atteints par un procédé de salage-séchage et fumage de produits alimentaires carnés préalablement préparés et découpés en filets, selon lequel, après avoir effectué le salage et le séchage, on expose lesdits produits à un flux de fumée dans une enceinte de fumage, caractérisé en ce qu'on réalise par une opération de séchage/imprégnation et simultanément, le salage et le séchage desdits filets de produits, en les mettant au contact d'un mélange de chlorure de sodium et de sucre, et en ce que, on réalise le fumage desdits filets de produits à basse température en fixant les particules colloïdales de la fumée par des moyens électrostatiques, et en ce que pendant le fumage des filets de produits, on maintient une température inférieure ou égale à 20° C.

De préférence, on maintient une température comprise entre 10 et 20° C.

De façon connue, la fumée est produite par la combustion du bois. Selon l'invention, on refroidit lesdites fumées et l'on condense et on évacue les hydrocarbures polycycliques aromatiques avant d'introduire les fumées dans ladite enceinte de fumage.

Pendant l'opération de séchage/imprégnation, on maintient une température comprise entre 2 et 14° C.

Selon un mode d'exécution, on met lesdits filets de produits au contact d'un mélange cristallisé de sucre et de chlorure de sodium et on mélange le chlorure de sodium et le sucre dans des proportions relatives de 10 à 30% pour le sucre et 70 à 90% pour le chlorure de sodium.

Selon un autre mode d'exécution, pendant l'opération de séchage/imprégnation, on immerge lesdits produits dans une solution aqueuse de chlorure de sodium et de sucre.

Pendant cette opération, on entretient une agitation relative des filets par rapport à ladite solution aqueuse, dans le but d'éviter les phénomènes de dilution et de maintenir des concentrations de soluté optimales au voisinage desdits filets.

Au terme de l'opération de séchage/imprégnation, et après un rapide rinçage et un égouttage de la solution, on met les filets de produits en circulation à travers l'enceinte de fumage sur le brin porteur d'un convoyeur à tapis métallique, que l'on relie au pôle négatif d'un générateur de courant électrique et au-dessous d'une grille métallique que l'on dispose parallèlement audit convoyeur et que l'on relie au pôle positif dudit générateur.

Les objectifs sont également atteints par le dispositif selon l'invention pour la mise en oeuvre dudit procédé, dont la solution aqueuse de sucre/chlorure de sodium est contenue dans un bac, lequel dispositif comporte des paniers perforés gerbables sur lesquels sont placés lesdits filets de produits et des moyens élévateurs et de transfert desdits paniers, pour les placer dans la solution contenue dans ledit bac pour ensuite les remonter au terme de l'opération de salage/imprégnation et enfin de les acheminer vers ladite enceinte de fumage caractérisé en ce que ledit bac est relié à un réservoir de solution aqueuse de sucre/chlorure de sodium, par un circuit fermé où ladite solution est mise en circulation au moyen d'une pompe centrifuge et comporte un serpentin dans lequel est mis en circulation un liquide frigorigène et un thermostat pour maintenir la température de la solution entre 2 et 14°C, et en ce que l'enceinte est maintenue à une température inférieure ou égale à 20°C.

Selon un autre mode de réalisation, ledit réservoir est exempt de serpentin et est placé dans une armoire frigorifique.

Dans un mode d'exécution, ledit bac est monté oscillant pour entretenir l'agitation relative solution/filets de produits pendant l'opération de séchage/imprégnation.

De préférence, il est d'une forme parallélépipédique, et est articulé sur un axe sensiblement horizontal rapproché d'une de ses parois latérales et est mis en appui sur au moins une came calée sur un arbre parallèle audit axe d'articulation et situé du côté de la paroi opposé à ladite paroi latérale du bac, lequel arbre est relié à l'arbre de sortie d'un moto-réducteur-variateur.

Ladite enceinte de fumage adopte la forme d'un tunnel isotherme, comporte à sa partie inférieure un convoyeur à tapis métallique relié à la phase négative d'un générateur de courant électrique et comporte en outre au-dessus du brin porteur du tapis dudit convoyeur une grille reliée à la phase positive dudit générateur.

Ledit convoyeur traverse ledit tunnel dans le sens entrée vers sortie, et s'étend sur la largeur du tunnel, de sorte que les bords latéraux dudit tapis jouxtent les parois latérales du tunnel.

Ladite grille est parallèle audit convoyeur et s'étend sur la section longitudinale du tunnel. La distance qui sépare la grille du brin porteur du tapis du convoyeur est comprise entre 15 et 30 centimètres.

Le tunnel comporte en outre des parois escamotables qui obturent ses extrémités au-dessus du brin porteur du tapis du convoyeur.

Lesdites parois sont constituées par des rideaux à lamelles.

Ledit tunnel comporte en outre au-dessus de ladite grille, une batterie froide pour maintenir dans le tunnel une température comprise entre 10 et 20° C et à sa partie supérieure une cheminée d'évacuation des fumées, comprenant un extracteur mécanique.

Le résultat de l'invention est la mise en oeuvre simultanée du salage et du séchage des filets de produits alimentaires carnés et de leur fumage à basse température, par application d'un procédé électrostatique.

Les avantages de l'invention sont nombreux :
- Réduction de trois à deux, du nombre d'opérations du procédé, le salage et le séchage étant réalisés simultanément au cours d'une étape dite séchage/imprégnation.
- Préservation de la qualité sanitaire des produits par un traitement à une température inférieure à 20° C.
- Obtention d'un produit plus homogène avant fumage, obtenu grâce à une opération de séchage/imprégnation lente.
- Maîtrise de la quantité de sel (Na cl) absorbée par le produit (poisson ou viande) avec une pénétration de sucre limitée, voire nulle, compatible avec la qualité organoleptique désirée du produit fini.
- Mise en oeuvre de l'opération de séchage/imprégnation en chambre froide classique, sans faire appel à une infrastructure spécifique onéreuse.
- Souplesse d'utilisation en faisant varier le rapport sel/sucre et le temps de traitement, ce qui permet de maîtriser le rapport perte en eau/gain en solutés.
- Rapidité de traitement. Comparée à un fumage classique, la durée de fumage par procédé électrostatique est divisée par deux et même trois, ce qui permet d'obtenir un gain sur le plan des coûts de production.
- Simplicité de l'équipement de fumage : la cellule n'ayant plus pour objet de sécher le produit, les moyens de ventilation sophistiqués et de régulation précise de l'hygrométrie mis en oeuvre dans les installations classiques, sont supprimés, ce qui entraîne un gain sur le plan de l'investissement et des coûts de production.
- Respect de l'environnement par limitation des rejets à l'atmosphère, dûe à l'utilisation optimum de la fumée produite.
- Respect du caractère "traditionnel" de l'aliment fumé, par l'utilisation de fumée produite directement ou indirectement par combustion de bois.

D'autres avantages et les caractéristiques de l'invention ressortiront encore à la lecture de la description suivante et en référence aux dessins annexés, sur lesquels :
- la figure 1 est une vue en perspective schématique d'un dispositif de séchage/imprégnation selon l'invention ;
- la figure 2 est une vue en perspective schématique illustrant les moyens utilisés pour le rinçage des produits issus du dispositif de la figure précédente ;
- la figure 3 est une vue en perspective schématique illustrant les produits issus de l'étape précédente et prêts à être placés sur le convoyeur du tunnel de fumage ;
- la figure 4 est une vue en perspective schématique d'un tunnel de fumage électrostatique selon l'invention.

Selon l'invention, on propose une technologie pour le traitement, c'est-à-dire le salage-séchage et fumage de produits carnés.

Dans le cas du poisson fumé et plus particulièrement de salmonidés et selon le procédé, le fumage est opéré à froid à une température inférieure à 20° C. Cette technologie permet de diminuer le temps de traitement et les coûts de production, tout en assurant un niveau de qualité sanitaire élevé et des qualités organoleptiques et nutritionnelles comparables aux produits traités de façon traditionnelle.

Le concept est de découpler l'opération de séchage de l'opération de fumage, afin de pouvoir optimiser le fumage.

Le séchage est donc réalisé simultanément à l'imprégnation. Pour ce faire, on remplace l'opération de salage en sel sec ou en saumure par une opération de séchage-imprégnation avec un mélange de sel et de sucre, soit à sec, soit en solution aqueuse concentrée.

Le sel utilisé est le chlorure de sodium (Na cl).

Le mélange de sel et de sucre permet de déplacer la limite de saturation (qui est inférieure à trente grammes de solutés pour cent grammes de solution avec du sel seul) à environ soixante-dix grammes de solutés pour cent grammes de solution avec un mélange sucre/sel.

C'est la mise en oeuvre de solutions fortement concentrées qui permet d'obtenir simultanément une déshydratation significative du produit et un gain en solutés contrôlé. L'utilisation de sucres de masses molaires élevées permet de limiter le gain en sucre dans le produit.

Le procédé selon l'invention consiste en la combinaison de deux opérations. Préalablement à ces opérations, le poisson est découpé en filets.

- Le séchage-imprégnation : le séchage du produit et son imprégnation en solutés sont réalisés simultanément par la mise au contact dudit produit avec un mélange sel/sucre. Ce mélange sel/sucre peut être utilisé soit sec, soit sous forme dissoute en solution aqueuse fortement concentrée.

A sec, les filets sont posés à plat sur des grilles et recouverts d'un mélange cristallisé sel/sucre, dont les proportions relatives varient entre 10 et 30% pour le sucre et 70 et 90% pour le sel, suivant l'espèce et l'épaisseur du filet travaillé.

En immersion, les filets de poisson sont disposés dans des paniers perforés. Le tout est ensuite immergé dans une solution mixte sel/sucre concentrée. Les valeurs des concentrations en sel et en sucre peuvent varier de zéro à saturation, de préférence entre 200 et 900 gr/litre d'eau pour le sucre, et entre 200 et 350 gr/litre d'eau pour le sel. La durée de traitement peut, elle, varier de une à vingt-quatre heures. Les valeurs de concentration et la durée du traitement dépendent du type de filets traités, selon l'espèce du poisson et l'épaisseur des filets et également des caractéristiques recherchées : teneur en sel, en sucre et en eau, pour le produit fini.

Une agitation relative des filets par rapport à la solution concentrée, doit être assurée tout au long de l'opération pour maintenir des concentrations en solutés optimales au voisinage du produit. Cette agitation peut être obtenue soit par un mouvement de va-et-vient, ou d'oscillation du panier, dans la solution par exemple à une fréquence de cinquante agitations par minute et à une amplitude de trois centimètres, soit en assurant une circulation de la solution autour des filets de produits, soit par la combinaison de ces deux moyens.

Quel que soit le mode de traitement, à sec ou en immersion, le procédé est mis en oeuvre en chambre froide à une température comprise entre 2 et 14° C.

Les produits issus de cette opération séchage/imprégnation sont ensuite rincés et égouttés en vue de leur fumage.

Le fumage est opéré en continu dans une enceinte électrostatique adoptant la forme d'un tunnel. Les filets sont introduits dans ledit tunnel en étant placés sur le brin porteur d'un convoyeur à tapis métallique relié au pôle négatif d'un générateur de courant électrique et au-dessous d'une grille métallique reliée au pôle positif dudit générateur.

La fumée produite par un générateur par la combustion de bois, est refroidie en aval dudit générateur au moyen d'un échangeur afin d'en condenser la phase lourde (hydrocarbures polycycliques aromatiques) d'une part, et d'autre part, maintenir une température contrôlée dans ledit tunnel. Les fumées issues du générateur sont introduites dans le tunnel et les particules colloïdales chargées positivement, se déposent très rapidement et de manière uniforme sur les filets en contact avec le tapis métallique relié à la phase négative du générateur électrique.

Le matériel mis en oeuvre par les opérations de séchage-imprégnation/fumage électrostatique sera décrit plus loin.

Des exemples de traitement de produits carnés sont donnés ci-après :

### Exemple 1

Poisson gras traité dans une solution mixte sel/saccharose.
- Caractéristiques initiales du produit :
   Filets de truites arc-en-ciel dont on a conservé la peau :
   . Longueur 190 mm
   . Largeur 65 mm
   . Epaisseur 5 mm
   . Masse 86 gr
   . Teneur en graisse initiale : 4,6 gr/100 gr de chair initiale,
   . Teneur en eau initiale : 75g/100 gr de chair initiale,
- Conditions de traitement :
   . Température de la solution : 8° C,
   . Durée d'immersion : 2 heures 15 minutes,
   . Concentration en sel : 350 gr/litre d'eau,
   . Concentration en saccharose : 300 gr/litre d'eau,

   Soit une concentration totale de la solution de 40° Brix.
- Résultats et qualité des produits obtenus :
   - Perte en eau de 10% (gr/100 gr de matière initiale)
   - Gain en sel de 3% (gr/100 gr de matière initiale)
   - Gain en sucre de 1% (gr/100 gr de matière initiale).

   Les filets sont ensuite rincés, égouttés et fumés.
   Une analyse organoleptique démontre que la qualité des produits finis ainsi obtenue est comparable à celle des produits ayant subi un procédé classique de salage, séchage et fumage.
   La teneur en sucre ≤ à 1% n'est pas perceptible au niveau organoleptique.

### Exemple 2

Poisson maigre traité dans une solution mixte sel/saccharose.
- Caractéristiques initiales du produit : Filets de cabillaud sans peau :
   . Longueur 150 mm
   . Largeur 60 mm
   . Epaisseur 9 mm
   . Masse 90 gr
   . Teneur en graisse initiale : 0,3g/100 gr de chair initiale,
   . Teneur en eau initiale : 80 gr/100 gr de chair initiale,
- Conditions de traitement :
   . Température de la solution : 11° C,
   . Durée d'immersion : 24 heures ,
   . Concentration en sel : 350 gr/litre d'eau,
   . Concentration en saccharose : 950 gr/litre d'eau,

   Soit une concentration totale de la solution de 55° Brix.
- Résultats et qualité des produits obtenus :
   . Perte en eau de 60% (gr/100 gr de matière initiale)
   . Gain en sel de 5% (gr/100 gr de matière initiale)
   . Gain en sucre de 10% (gr/100 gr de matière initiale).

Les caractéristiques du produit final sont tout à fait comparables à celles de morues traditionnelles (morues des pêcheries de Fécamp ou de Gaspé) pour les teneurs en eau et en sel finales.

La teneur en sucre est élevée (10%) lorsque l'on utilise du saccharose. L'utilisation d'un sucre de masse molaire importante par exemple DE < 40 permet de réduire considérablement cette imprégnation comme mentionné à l'exemple suivant.

### Exemple 3

Poisson maigre traité dans une solution mixte sel/maltodextrine DE 38.
- Caractéristiques initiales du produit :
   Filets de cabillaud sans peau :
   . Longueur 150 mm
   . Largeur 60 mm
   . Epaisseur 9 mm
   . Masse 90 gr
   . Teneur en graisse initiale : 0,3 gr/100 gr de chair initiale,
   . Teneur en eau initiale : 80g/100 gr de chair initiale,
- Conditions de traitement :
   . Température de la solution : 11° C,
   . Durée d'immersion : 24 heures ,
   . Concentration en sel : 350 gr/litre d'eau,
   . Concentration en maltodextrine : 950 gr/litre d'eau,

   Soit une concentration totale de la solution de 55° Brix.
- Résultats et qualité des produits obtenus :
   . Perte en eau de 50% (gr/100 gr de matière initiale)
   . Gain en sel de 5% (gr/100 gr de matière initiale)
   . Gain en sucre de 0,5% (gr/100 gr de matière initiale).

### Exemple 4

Filets de viande dans une solution mixte sel/saccharose.
- Caractéristiques initiales du produit :
   Filets de boeuf (gîte-noix)
   . Longueur 70 mm
   . Largeur 70 mm
   . Epaisseur 10 mm
   . Masse 45 gr
   . Teneur en graisse initiale : 3 gr/100 gr de chair initiale,
   . Teneur en eau initiale : 75g/100 gr de chair initiale,
- Conditions de traitement :
   . Température de la solution : 11° C,
   . Durée d'immersion : 12 heures ,
   . Concentration en sel : 100 gr/litre d'eau,
   . Concentration en saccharose : 1750 gr/litre d'eau,

   Soit une concentration totale de la solution de 65° Brix.
- Résultats et qualité des produits obtenus :
   . Perte en eau de 40% (gr/100 gr de matière initiale)
   . Gain en sel de 5% (gr/100 gr de matière initiale)
   . Gain en sucre de 5% (gr/100 gr de matière initiale).

Les caractéristiques du produit final en terme de teneur en eau et en sel finales, sont tout à fait comparables à celles des viandes traitées de façon traditionnelle, telles que viande des grisons ou jambon.

La teneur en sucre est élevée (5%) lorsqu'on utilise du saccharose. L'utilisation d'un sucre de masse molaire importante (DE <40) permet de réduire considérablement l'imprégnation comme mentionné à l'exemple 3.

On donne également ci-après des exemples de fumage électrostatiques :

### Exemple 5

Filet de poisson gras :
- Caractéristiques initiales du produit :
   Filets de saumon préalablement salé et séché :
   . Masse 800 gr
   . Teneur en eau initiale : 65 gr /100 gr de chair initiale,
   . Teneur en sel : 2,5 g/100 gr de chair initiale

   Distance entre électrodes (convoyeur/grille) : 15 cm
- Caractéristiques finales :
   . Fumage électrostatique :
   . Durée du traitement : 1 heure 15 minutes,
   . Teneur en phénols totaux : 0,92 mg/100 gr de chair,

   Par comparaison, le fumage classique donne les résultats suivants :
   . Durée du traitement : 2 heures 30 minutes,
   . Teneur en phénols totaux : 0,87 mg/100 gr de chair

### Exemple 6

Filets de poisson maigre :
- Caractéristiques initiales du produit : Filet de cabillaud préalablement salé et séché :
   . Masse 400 gr
   . Teneur en eau initiale : 70 gr /100 gr de chair initiale,
   . Teneur en sel : 2,5 g/100 gr de chair initiale

   Distance entre électrodes (convoyeur/grille) : 15 cm
- Caractéristiques finales :
   . Fumage électrostatique :
   . Durée du traitement : 45 minutes,
   . Teneur en phénols totaux : 1 mg/100 gr de chair,

   Par comparaison, le fumage classique donne les résultats suivants :
   . Durée du traitement : 1 heure 30 minutes,
   . Teneur en phénols totaux : 1 mg/100 gr de chair

   On donne enfin ci-après un dernier exemple du traitement total séchage/imprégnation/fumage électrostatique concernant un produit courant du commerce, en l'occurrence un lot de filets de saumon d'Irlande d'un poids de un kilogramme.

### Exemple 7

Après préparation du poisson : éviscération, découpage en filets :
. Longueur 500 mm
. Largeur 130 mm
. Epaisseur 30 mm
. Masse 1000 gr
. Teneur en graisse initiale : 8,5 gr/100 gr de chair initiale,
. Teneur en eau initiale : 68 gr/100 gr de chair initiale,

- Conditions de traitement :
   . Température de la solution : 2° C,
   . Durée d'immersion : 15 heures,
   . Sucre : 20%
   . Sel : 80%
- Fumage électrostatique :
   . Température de traitement : 20° C
   . Hygrométrie : 78%
   . Distance entre électrodes : 15 cm
   . Tension U : 10 à 30 KV
   . Ampérage I : 130 à 170 µA
- Composition du produit fini :
   . pH surface : 2,71
   . pH interne : 6.00
   . Teneur en eau : 64,23 gr/100 gr
   . Teneur en magnésium : 7,95 g/100 gr
   . Teneur en sel (Na cl) : 2,86 gr/100 gr
   . Teneur en azote : 3,61 gr/100 gr
   . Teneur en phénol : 2,16 mg/100 gr
   . Perte en eau pendant le déroulement du procédé avant fumage : 9,1%
   . Perte en eau globale après fumage : 10%

On se reporte maintenant aux dessins qui donnent de façon schématique les composants d'une installation de séchage-imprégnation et de fumage électrostatique. L'opération de séchage-imprégnation se déroule dans une chambre froide (non représentée).

Les filets de produits 1 sont placés à plat sur des paniers perforés 2 superposés et gerbables, disposés dans une structure par exemple métallique 3 et suspendue à un pont élévateur 4.

L'ensemble des paniers 2 forme un volume parallélépipédique.

Après avoir été élevés par le pont 4, la structure et l'ensemble de paniers 2 qu'elle contient est positionné à l'aplomb d'un bac parallélépipédique 6 contenant une solution aqueuse de sucre/chlorure de sodium 7. La capacité du bac 6 est telle qu'il est capable de contenir l'ensemble de paniers 2 et la solution après immersion dudit ensemble sous la commande du pont 4 et la descente des paniers 2 dans le bac 6.

La solution 7 est renouvelée dans ledit bac au moyen d'une pompe centrifuge 8, dont l'orifice de refoulement est relié par un tube 8a à un orifice d'entrée du bac situé à sa partie inférieure, et dont l'orifice d'aspiration est relié par une conduite 9 à un réservoir 10 contenant une réserve de solution.

Le bac 6 comporte à sa partie supérieure une tubulure de "trop plein" 6a reliée par des brides 6b à une tubulure de retour 11, à la partie supérieure du réservoir 10.

La régulation de la température de la solution est réalisée dans la réserve 10 par un serpentin de refroidissement 12, dans lequel circule un fluide frigorigène, tel que par exemple de l'eau glycolée provenant d'un groupe frigorifique. Un thermostat 13 assure la régulation de la température de traitement, qui peut être comprise entre 2 et 14° C.

L'agitation de la solution contenue dans le bac 6 pour éviter les phénomènes de dilution et maintenir la solution à une concentration optimale au voisinage des filets, est obtenue en montant le bac 6 de façon oscillante.

Ledit bac est articulé à un châssis 14 autour d'un axe 15 monté dans deux pattes 6c fixées à la partie inférieure du bac.

L'axe 15 est parallèle à une des parois latérales 6d du bac et est rapproché de celle-ci, de telle sorte qu'il est monté en porte-à-faux sur deux supports 14a dudit châssis 14. Ainsi monté, il a tendance à pivoter dans le sens de la flèche F et est mis en appui sur deux cames 16 calées sur un arbre 17 parallèle à l'axe 15 et rapproché de la paroi 6e située en opposition de ladite paroi 6d du bac.

Lesdites cames 16 sont d'un profil par exemple ovoïde, ce qui a pour effet, lors de leur entraînement en rotation, de communiquer au bac un mouvement oscillatoire dans le sens vertical autour dudit axe 15. Ledit arbre 17 est monté sur deux supports 14b fixés audit châssis 14 et est relié par un joint 18, par exemple à cardan ou similaire, à l'arbre de sortie 19a d'un moto-réducteur-variateur 19.

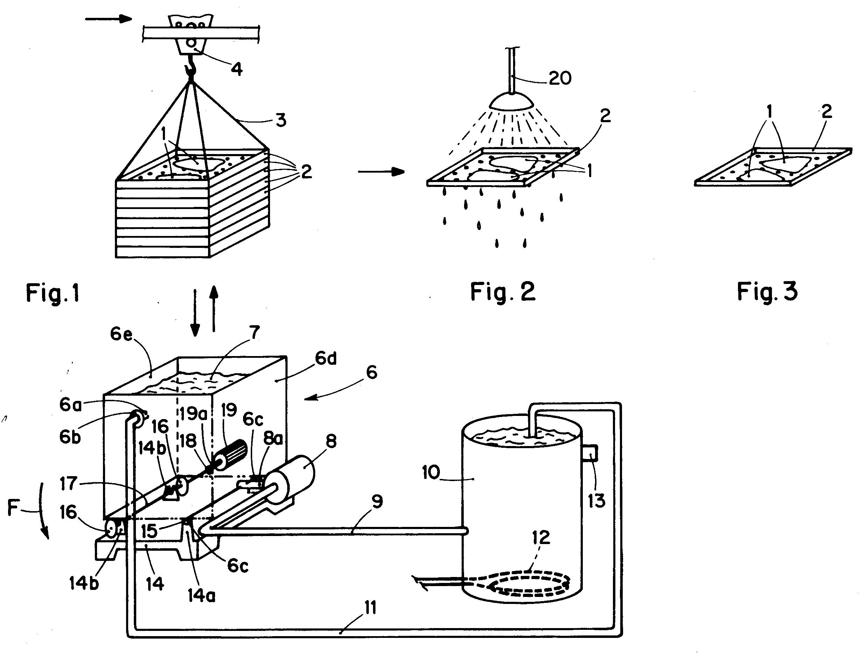

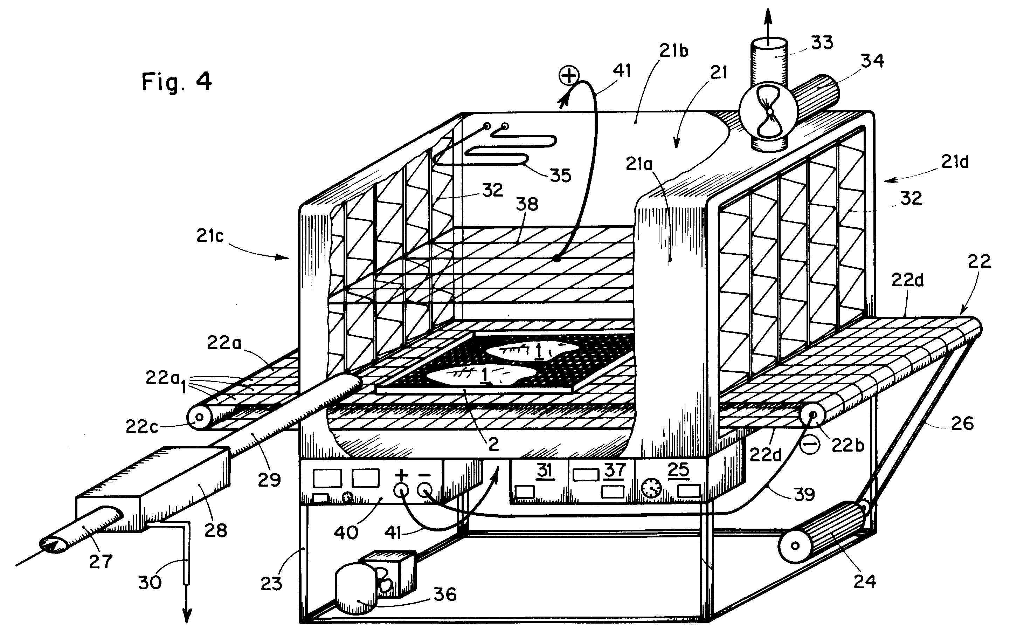

Au terme de la période d'immersion, l'ensemble de paniers 2 est extrait du bac 6 en commandant le levage par le pont élévateur 4. L'ensemble de paniers 2, ou éventuellement chaque panier 2 après dissociation, et translation latérale, est placé au-dessous d'une douche 20 où les filets de produits 1 sont soumis à une opération de rinçage. Les produits 1 sont ensuite égouttés (figure 3) et sont entreposés en vue de leur transfert jusqu'au tunnel de fumage 21 (figure 4).

Celui-ci est d'une forme allongée et est d'une section droite rectangulaire. Il est traversé dans le sens entrée 21a/sortie 21b par un convoyeur 22 situé à sa partie inférieure et qui s'étend de part et d'autre du tunnel.

Le convoyeur 22 est du type à tapis 22a, lequel est formé par des lamelles métalliques articulées 22a₁, par exemple en acier inoxydable.

De façon connue, le tapis 22a est guidé en s'enroulant autour d'un tambour moteur 22b et d'un tambour libre en rotation 22c.

Le convoyeur 22 s'étend sur la largeur du tunnel, de telle sorte que ses bords latéraux 22d jouxtent les parois latérales 21a/21b du tunnel 21. Ainsi monté le convoyeur 22 constitue le fond du tunnel 21.

Les paniers 2 chargés des filets de produits 1 et issus du poste de la figure 3, sont placés sur le brin supérieur porteur 22a du tapis 22 et sont transférés à vitesse lente à travers le tunnel 21, dans le sens entrée 21c/sortie 21d.

Ledit tunnel est supporté par un bâti 23 dans lequel sont montés des appareillages annexes nécessaires à son fonctionnement.

Le tapis 22a du convoyeur 22 est entraîné par un moto-réducteur-variateur 24 relié à un tableau de commande 25 et une transmission 26 par exemple à chaîne et pignons. Les fumées issues de la combustion du bois dans un générateur (non représenté) sont acheminées par une tubulure 27 et sont refroidies en traversant un échangeur 28 situé en amont du tunnel et sont introduites par une autre tubulure 29 à la partie inférieure du tunnel et au-dessus du convoyeur 22. Les condensats : soit les hydrocarbures polycycliques aromatiques résultant de la phase lourde de la condensation, sont rejetés à l'égout par une tubulure d'évacuation 30. Le générateur de fumée est commandé à partir d'un tableau 31.

Pour retenir la fumée pendant l'opération de fumage, le tunnel 21 comporte des rideaux à lamelles 32 qui obturent les ouvertures d'entrée 21c et sortie 21d au-dessus du tapis 22a du convoyeur 22. L'excédent de fumée est évacué à la partie supérieure du tunnel 21 par une cheminée 33, dont le tirage est obtenu par une turbine d'extraction 34.

Le tunnel comporte en outre à sa partie supérieure et dans l'enceinte de fumage, une batterie froide 35 comprenant plusieurs boucles de tubes dans lesquelles circule un fluide frigorigène tel que de l'eau glycolée produit par un groupe frigorifique 36 relié à une cellule de régulation 37. Cette batterie 35 a pour fonction de maintenir l'enceinte à la température de fumage inférieure à 20° C.

Le tunnel 21 comporte en outre au-dessus du convoyeur 22 une grille métallique 38 amovible, qui repose sur des supports fixés aux parois latérales du tunnel. Ladite grille occupe la section longitudinale interne du tunnel et est à position réglable en hauteur.

Le convoyeur 22 est relié par une ligne 39 au pôle négatif d'un générateur de courant électrique 40 à haute fréquence, dont le pôle positif est relié par une ligne 41 à ladite grille 38 constituant ainsi une électrode de ionisation. Les particules colloïdales de la fumée chargées positivement, se déposent très rapidement et de manière uniforme et se fixent sur le poisson, relié à la masse par contact avec le convoyeur 22.

## Revendications

1. Procédé de salage-séchage et fumage de produits alimentaires carnés préalablement préparés et découpés en filets, selon lequel, après avoir effectué le salage et le séchage, on expose lesdits produits à un flux de fumée dans une enceinte de fumage, caractérisé en ce qu'on réalise par une opération de séchage/imprégnation et simultanément, le salage et le séchage desdits filets de produits (1), en les mettant au contact d'un mélange de chlorure de sodium et de sucre, et en ce que, on réalise le fumage desdits filets de produits (1) à basse température en fixant les particules colloïdales de la fumée par des moyens électrostatiques (22/38/40), et en ce que pendant le fumage des filets de produits (1), on maintient une température inférieure ou égale à 20° C.

2. Procédé selon la revendication 1 dont la fumée est produite par la combustion du bois, caractérisé en ce que l'on refroidit lesdites fumées et l'on condense et on évacue les hydrocarbures polycycliques aromatiques avant d'introduire les fumées dans ladite enceinte de fumage (21).

3. Procédé selon la revendication 1 ou 2 caractérisé en ce que pendant l'opération de séchage/imprégnation, on met lesdits filets de produits (1) au contact d'un mélange cristallisé de sucre et de chlorure de sodium.

4. Procédé selon l'une quelconque des revendications 1 ou 2 caractérisé en ce que pendant l'opération de séchage/imprégnation, on immerge lesdits produits dans une solution aqueuse de chlorure de sodium et de sucre.

5. Procédé selon l'une quelconque des revendications 1 à 4 caractérisé en ce que l'on mélange le chlorure de sodium et le sucre dans des proportions relatives de 10 à 30 % pour le sucre et 70 à 90 % pour le chlorure de sodium

6. Procédé selon l'une quelconque des revendications 1 à 5, selon lequel on met les filets de produits (1) en circulation à travers une enceinte de fumage sur le brin porteur (22a) d'un convoyeur (22) à tapis métallique, caractérisé en ce que l'on relie ledit convoyeur au pôle négatif d'un générateur de courant électrique (40) et au-dessous d'une grille métallique (38) que l'on dispose parallèlement audit convoyeur (22) et que l'on relie au pôle positif dudit générateur (40).

7. Dispositif pour la mise en oeuvre du procédé selon l'une quelconque des revendication 1 à 2 ou 4 à 6 dont la solution aqueuse de sucre/chlorure de sodium est contenue dans un bac (6), lequel dispositif comporte des paniers perforés gerbables (2) sur lesquels sont placés lesdits filets de produits (1) et des moyens élévateurs et de transfert (4) desdits paniers, pour les placer dans la solution (7) contenue dans ledit bac (6) pour ensuite les remonter au terme de l'opération de salage/imprégnation et enfin les acheminer vers ladite enceinte de fumage (21), caractérisé en ce que ledit bac (6) est relié à un réservoir (10) de solution aqueuse de sucre/chlorure de sodium, par un circuit fermé (9/11) où ladite solution est mise en circulation au moyen d'une pompe centrifuge (8) et comporte un serpentin (12) dans lequel est mis en circulation un liquide frigorigène et un thermostat (13) pour maintenir la température de la solution entre 2 et 14°C, et en ce que l'enceinte (21) est maintenue à une température inférieure ou égale à 20° C.

8. Dispositif selon la revendication 7, caractérisé en ce que ledit réservoir de solution (10) est placé dans une armoire frigorifique.

9. Dispositif selon la revendication 7 dans lequel la solution est soumise à une agitation dans le but de maintenir des concentrations de soluté optimales au voisinage des filets de produits, caractérisé en ce que ledit bac (6) est monté oscillant pour entretenir l'agitation relative solution (7)/filets de produits (1) pendant l'opération de séchage/imprégnation.

10. Dispositif selon la revendication 9 dont le bac (6) est parallélépipédique, caractérisé en ce que ledit bac est articulé sur un axe (15) sensiblement horizontal rapproché d'une de ses parois latérales (6d) et est mis en appui sur au moins une came (16) calée sur un arbre (17) parallèle audit axe d'articulation (15) et situé du côté de la paroi (6e) opposé à ladite paroi latérale (6d) du bac, lequel arbre (17) est relié à l'arbre de sortie (19a) d'un moto-réducteur-variateur (19).

11. Dispositif selon l'une quelconque des revendications 7 à 10 dont ladite enceinte de fumage (21) adopte la forme d'un tunnel isotherme, caractérisé en ce qu'elle comporte à sa partie inférieure un convoyeur (22) à tapis métallique (22a) relié à la phase négative d'un générateur de courant électrique (40) et qu'elle comporte en outre au-dessus du brin porteur du tapis (22a) dudit convoyeur une grille (38) reliée à la phase positive dudit générateur (40).

12. Dispositif selon la revendication 11 dont ledit convoyeur (22) traverse ledit tunnel (21) dans le sens entrée (21c) vers sortie (21d), caractérisé en ce que ledit convoyeur (22) s'étend sur la largeur du tunnel, de sorte que les bords latéraux dudit tapis (22a) jouxtent les parois latérales (21a/21b) du tunnel (21).

13. Dispositif selon l'une quelconque des revendications 11 ou 12, dont la grille (38) est parallèle audit convoyeur (22) et s'étend sur la section longitudinal du tunnel, caractérisé en ce que la distance qui sépare la grille (38) du brin porteur du tapis (22a) du convoyeur (22) est comprise entre 15 et 30 centimètres.

14. Dispositif selon l'une quelconque des revendications 11 à 13 caractérisé en ce que le tunnel (21) comporte des parois escamotables (32) qui obturent ses extrémités (21c/21d) au-dessus du brin porteur du tapis (22a) du convoyeur (22).

15. Dispositif selon la revendication 14 caractérisé en ce que lesdites parois (32) sont constituées par des rideaux à lamelles.

16. Dispositif selon l'une quelconque des revendications 11 à 15 caractérisé en ce que le tunnel (21) comporte au-dessus de ladite grille (38) une batterie froide (35) pour maintenir dans le tunnel une température inférieure ou égale à 20°C.

17. Dispositif selon l'une quelconque des revendications 11 à 16, caractérisé en ce que le tunnel (21) comporte à sa partie supérieure une cheminée (33) d'évacuation des fumées, comprenant un extracteur mécanique (34).

## Claims

1. Process for salting, drying and smoking meat products previously prepared and cut into filets, wherein, after having effected salting and drying, said products are exposed to a flux of smoke in a smoking enclosure, characterized in that the salting and drying of said filets of products (1) are effected by an operation of drying/impregnation and simultaneously, by placing them in contact with a mixture of sodium chloride and of sugar, and in that said filets of products (1) are smoked at low temperature, by fixing the colloidal particles of the smoke by electrostatic means (22/38/40), and in that, during smoking of the filets of products (1), a temperature lower than or equal to 20°C is maintained.

2. Process according to Claim 1, in which the smoke is produced by the combustion of wood, characterized in that said smoke is cooled and the aromatic polycyclic hydrocarbons are condensed and evacuated before introducing the smoke in said smoking enclosure (21).

3. Process according to Claim 1 or 2, characterized in that, during the drying/impregnation operation, said filets of products (1) are placed in contact with a crystallized mixture of sugar and of sodium chloride.

4. Process according to either one of Claims 1 or 2, characterized in that, during the drying/impregnation operation, said products are immersed in an aqueous solution of sodium chloride and of sugar.

5. Process according to any one of Claims 1 to 4, characterized in that the sodium chloride and the sugar are mixed in relative proportions of 10 to 30% for the sugar and 10 to 90% for the sodium chloride.

6. Process according to any one of Claims 1 to 5, in which the filets of products (1) are circulated through a smoking enclosure on the carrying side (22a) of a metallic belt conveyor (22), characterized in that said conveyor is connected to the negative pole of an electric current generator (40) and below a metallic grid (38) which is disposed parallel to said conveyor (22) and which is connected to the positive pole of said generator (40).

7. Device for carrying out the process according to any one of Claims 1 to 2 or 4 to 6, of which the aqueous solution of sugar/sodium chloride is contained in a tank (6), which device comprises stackable perforated baskets (2) on which said filets of products (1) are placed and means (4) for elevating and transferring said baskets, to place them in the solution (7) contained in said tank (6) and then to raise them at the end of the salting/impregnation operation and finally convey them towards said smoking enclosure (21), characterized in that said tank (6) is connected to a reservoir (10) of aqueous sugar/sodium chloride solution, by a closed circuit (9/11) where said solution is circulated by means of a centrifugal pump (8) and comprises a coil (12) in which a cooling liquid is circulated and a thermostat (13) for maintaining the temperature of the solution between 2 and 14°C, and in that the enclosure (21) is maintained at a temperature lower than or equal to 20°C.

8. Device according to Claim 7, characterized in that said reservoir of solution (10) is placed in a cold chamber.

9. Device according to Claim 7, in which the solution is subjected to stirring with a view to maintaining optimum concentrations of solute in the vicinity of the filets of products, characterized in that said tank (6) is mounted to oscillate in order to maintain the relative solution (7)/filets of products (1) stirring during the drying/impregnation operation.

10. Device according to Claim 9 of which the tank (6) is parallelepipedic, characterized in that said tank is articulated on a substantially horizontal pin (15) close to one of its lateral walls (6d) and is placed in abutment on at least one cam (16) fitted on a shaft (17) parallel to said pivot pin (15) and located towards the wall (6e) opposite said lateral wall (6d) of the tank, which shaft (17) is connected to the driven shaft (19a) of a gear-motor/variable speed drive (19).

11. Device according to any one of Claims 7 to 10, in which said smoking enclosure (21) takes the form of an isothermal tunnel, characterized in that it comprises in its lower part a conveyor (22) with metal belt (22a) connected to the negative phase of an electric current generator (40) and that it further comprises above the carrying side of the belt (22a) of said conveyor a grid (38) connected to the positive phase of said generator (40).

12. Device according to Claim 11 in which said conveyor (22) traverses said tunnel (21) in the direction inlet (21c) towards outlet (21d), characterized in that said conveyor (22) extends over the width of the tunnel, with the result that the lateral edges of said belt (22a) are next to the lateral walls (21a/21b) of the tunnel (21).

13. Device according to either one of Claims 11 or 12, of which the grid (38) is parallel to said conveyor (22) and extends over the longitudinal section of the tunnel, characterized in that the distance which separates the grid (38) from the carrying side of the bell (22a) of the conveyor (22) is included between 15 and 30 centimetres.

14. Device according to any one of Claims 11 to 13, characterized in that the tunnel (21) comprises retractable walls (32) which obturate its ends (21c/21d) above the carrying side of the belt (22a) of the conveyor (22).

15. Device according to Claim 14, characterized in that said walls (32) are constituted by slatted curtains.

16. Device according to any one of Claims 11 to 15, characterized in that the tunnel (21) comprises above said grid (38) a cooling battery (35) for maintaining in the tunnel a temperature lower than or equal to 20°C.

17. Device according to any one of Claims 11 to 16, characterized in that the tunnel (21) comprises in its upper part a shaft (33) for evacuating the smoke, comprising a mechanical extractor (34).

## Patentansprüche

1. Verfahren zum Salzen-Trocknen sowie Räuchern von Fleisch-Nahrungsmittelprodukten, die zugerichtet und zu Filets geschnitten sind, wobei man nach Bewirken der Salzung und Trocknung die genannten Produkte einem Rauchstrom in einer Räucherkammer aussetzt, dadurch gekennzeichnet, daß man einen Trocknungs-/Imprägnierungsvorgang und gleichzeitig die Salzung und Trocknung der genannten Filetprodukte (1) vornimmt, indem man sie in Berührung mit einer Mischung aus Natriumchlorid und Zucker bringt, daß man das Räuchern der genannten Filetprodukte (1) mit niedriger Temperatur bewirkt, indem man die kolloidalen Patrikel des Rauchs durch elektrostatische Mittel (22/38/40) fixiert, und daß man während des Räucherns der Filetprodukte (1) eine Temperatur aufrechterhält, die gleich oder kleiner ist als 20°C.

2. Verfahren nach Anspruch 1, bei dem der Rauch durch die Verbrennung von Holz erzeugt wird, dadurch gekennzeichnet, daß man die genannten Rauchmengen abkühlt und die aromatischen, polyzyklischen Kohlenwasserstoffe kondensiert und entfernt, bevor man die Rauchmengen in die genannte Räucherkammer (21) einleitet.

3. Verfahren nach Anspruch 1 oder 2, dadurch gekennzeichnet, daß man während des Trocknungs-/Imprägnierungsvorganges die genannten Filetprodukte (1) in Kontakt mit einer kristallisierten Mischung aus Zucker und Natriumchlorid bringt.

4. Verfahren nach irgendeinem der Ansprüche 1 oder 2, dadurch gekennzeichnet, daß man während des Trocknungs-/Imprägnierungsvorganges die genannten Produkte in eine wässrige Lösung aus Natriumchlorid und Zucker eintaucht.

5. Verfahren nach irgendeinem der Ansprüche 1 bis 4, dadurch gekennzeichnet, daß man das Natriumchlorid und den Zucker in relativen Anteilen von 10 bis 30% für den Zucker und von 70 bis 90% für das Natriumchlorid vermischt.

6. Verfahren nach irgendeinem der Ansprüche 1 bis 5, gemäß welchem man die Filetprodukte (1) auf dem tragenden Trum (22a) eines Metallband-Förderers (22) durch eine Räucherkammer hindurch in Umlauf versetzt, dadurch gekennzeichnet, daß man den genannten Förderer mit dem negativen Pol eines Generators (40) für elektrischen Strom und unterhalb eines Metallrostes (38) verbindet, den man parallel zum genannten Förderer (22) anordnet, und daß man mit diesem den positiven Pol des genannten Generators (40) verbindet.

7. Vorrichtung zum Durchführen des Verfahrens gemäß irgendeinem der Ansprüche 1 bis 2 oder 4 bis 6, wobei die wässrige Lösung aus Zucker/Natriumchlorid in einem Behälter (6) angeordnet ist und die genannte Vorrichtung perforierte, stapelbare Körbe (2) aufweist, in welchen die genannten Filetprodukte (1) angeordnet sind, sowie Hebe- und Umsetzmittel (4) für die genannten Körbe, um sie in eine Lösung (7) zu setzen, die im genannten Behälter (6) enthalten ist, damit man sie dann am Ende des Salzungs-/Imprägnierungsvorgangs wieder herausholt und schließlich zur genannten Räucherkammer (21) sendet, dadurch gekennzeichnet, daß der genannte Behälter (6) durch einen geschlossenen Umlauf (9/11) mit einem Vorratsbehälter (10) für wässrige Lösung aus Zucker/Natriumchlorid verbunden ist, wo die genannte Lösung mittels einer Fliehkraftpumpe (8) in Umlauf versetzt ist, und der eine Rohrschlange (12), in der eine Kälteflüssigkeit im Umlauf gesetzt ist, sowie ein Thermostat (13) aufweist, um die Temperatur der Lösung zwischen 2 und 14°C zu halten, und daß die Kammer (21) bei einer Temperatur kleiner oder gleich 20°C gehalten ist.

8. Vorrichtung nach Anspruch 7, dadurch gekennzeichnet, daß der gekannte Lösungs-Vorratsbehälter (10) in einen Kühlschrank gesetzt ist.

9. Vorrichtung nach Anspruch 7, worin die Lösung einer Rührtätigkeit zu dem Zweck unterzogen ist, optimale Lösungskonzentrationen in der Nähe der Filetprodukte aufrechtzuerhalten, dadurch gekennzeichnet, daß der genannte Behälter (6) oszillierend angebracht ist, um die relative Rührwirkung zwischen der Lösung (7) und den Filetprodukten (1) während des Trocknungs-/Imprägnierungsvorganges zu unterhalten.

10. Vorrichtung nach Anspruch 9, bei der der Behälter (6) parallelepipedförmig ist, dadurch gekennzeichnet, daß der genannte Behälter auf einer Achse (15), die im wesentlichen horizontal verläuft, schwenkbar gelagert ist, die an eine seiner seitlichen Wände (6d) angenähert ist, und in Anlage mit mindestens einem Nocken (16) steht, der auf eine Welle (17) aufgezogen ist, die zur genannten Schwenkachse (15) parallel ist und auf der Seite der Wand (6e) gelegen ist, die der genannten Seitenwand (6d) des Behälters gegenüberliegt, wobei die genannte Welle (17) mit der Ausgangswelle (19a) eines Untersetzungs-Varioantriebs (19) verbunden ist.

11. Vorrichtung nach irgendeinem der Ansprüche 7 bis 10, bei der die genannte Räucherkammer (21) die Form eines isothermen Tunnels einnimmmt, dadurch gekennzeichnet, daß sie an ihrem inneren Abschnitt einen Förderer (22) mit einem Metallband (22a) aufweist, das mit der negativen Phase eines Generators für elektrischen Strom (40) verbunden ist, und daß sie außerdem über dem tragenden Trum des Bandes (22a) des genannten Förderers einen Rost 38) aufweist, der mit der positiven Phase des genannten Generators (40) verbunden ist.

12. Vorrichtung nach Anspruch 11, bei der der genannte Förderer (22) den genannten Tunnel (21) in der Richtung vom Einlaß (21c) zum Auslaß (21d) durchquert, dadurch gekennzeichnet, daß der genannte Förderer (22) sich über die Breite des Tunnels derart erstreckt, daß die seitlichen Ränder des genannten Bandes (22a) neben den seitlichen Wänden (21a/21b) des Tunnels (21) liegen.

13. Vorrichtung nach irgendeinem der Ansprüche 11 oder 12, bei der sich der Rost (38) parallel zum genannten Förderer (22) und über den Längs-Querschnitt des Tunnels hinweg erstreckt, dadurch gekennzeichnet, daß der Abstand, der den Rost (38) vom tragenden Trum des Bandes (22a) des Förderers (22) trennt, zwischen 15 und 30 cm beträgt.

14. Vorrichtung nach irgendeinem der Ansprüche 11 bis 13, dadurch gekennzeichnet, daß der Tunnel (21) einklappbare Wände (32) aufweist, die seine Enden (21c/21d) über dem tragenden Trum des Bandes (22a) des Förderers (22) versperren.

15. Vorrichtung nach Anspruch 14, dadurch gekennzeichnet, daß die genannten Wände (32) von Lamellenvorhängen gebildet sind.

16. Vorrichtung nach irgendeinem der Ansprüche 11 bis 15, dadurch gekennzeichnet, daß der Tunnel (21) über dem genannten Rost (38) einen Kühlkörper (35) aufweist, um im Tunnel eine Temperatur aufrechtzuerhalten, die gleich oder kleiner ist als 20°C.

17. Vorrichtung nach irgendeinem der Ansprüche 11 bis 16, dadurch gekennzeichnet, daß der Tunnel (21) an seinem oberen Abschnitt einen Kamin (33) zum Ablassen der Rauchmengen aufweist, der eine mechanische Absaugeinrichtung (34) aufweist.
